# EUROPEAN PATENT APPLICATION

(11) **EP 4 624 190 A1**
(43) Date of publication of application: **01.10.2025**
(21) Application number: 24166910.0
(22) Date of filing: 27.03.2024
(51) Int. Cl.: B60B 27/00, B60B 33/00, B60L 1/00

(54) **A SWIVEL CASTER WITH A DRIVEN WHEEL**

(71) Applicant: LINAK A/S, 6430 Nordborg (DK)
(72) Inventor: Bastholm, Jeppe, 6400 Sønderborg (DK)
(74) Representative: Høyer, Michael

(57) **Abstract**

1. A swivel caster comprises a wheel, an electric motor (51) incorporated into a wheel hub for driving the wheel, and a shaft for connecting the swivel caster to a mobile wheeled device and allowing the swivel caster to rotate around a longitudinal axis of the shaft. The swivel caster further comprises a sensor arrangement (65) comprising a rotary encoder arranged in said wheel hub and configured to measure an angular acceleration of the wheel, and a controller (64) configured to control a drive current provided to the electric motor (51) in dependence of the measured angular acceleration. In this way, a swivel caster is provided that is able to assist an operator in moving a mobile wheeled device with an assisting torque in direct dependence of a force exerted on the mobile wheeled device by a person pushing or pulling it, thus reflecting the intention of that person.

## Description

### Technical Field

The invention relates to a swivel caster comprising a wheel driven by an electric motor for use in a mobile wheeled device, and to a mobile wheeled device comprising at least one swivel caster.

### Background

Mobile wheeled devices, such as hospital beds, shopping carts, roller tables, trolleys, transport containers or waste containers, are typically equipped with wheels for enabling them to be easily moved around. Such wheels may be fixed wheels or swivel caster wheels, or a combination thereof. The use of swivel caster wheels makes it easier for a person to guide the mobile wheeled device in a desired direction.

Since such a mobile wheeled device often carries a considerable weight, it may be heavy to push for a person. Therefore, like in an electric bike, an electric motor may be used to assist the person in pushing the mobile wheeled device.

An example of this is known from US 2015/0216487, which shows a medical apparatus in the form of a hospital bed having a base with four wheels. The wheels, or some of them, can be driven by electric motors arranged on the base. A force sensor is arranged on e.g. a handle or guide apparatus, which enables an operator to move the medical apparatus, so that the force sensor detects the force with which the operator pushes or pulls the medical apparatus. A controller can then activate the motors in dependence of the force detected by the force sensor, and thus assist the operator who moves the medical apparatus.

However, in this medical apparatus several different components, such as the force sensor, the controller, and the motors, are placed on different places on the medical apparatus. This requires separate electrical connections between the force sensor and the controller, and between the controller and the motors. Further, a mechanical connection is needed between the motors and the wheels.

### Summary

Therefore, it is an object of embodiments of the invention to provide a swivel caster that allows a simpler solution without the electrical and mechanical connections between several components on the mobile wheeled device, and which is able to assist an operator in moving the mobile wheeled device by driving a wheel of the mobile wheeled device in an efficient way in dependence of the force with which an operator pushes or pulls the mobile wheeled device.

According to embodiments of the invention the object is achieved in a swivel caster comprising a wheel, an electric motor incorporated into a wheel hub for driving the wheel, and a shaft for connecting the swivel caster to a mobile wheeled device and allowing the swivel caster to rotate around a longitudinal axis of the shaft. The swivel caster further comprises a sensor arrangement comprising a rotary encoder arranged in said wheel hub and configured to measure an angular acceleration of the wheel, and a controller configured to control a drive current provided to the electric motor in dependence of the measured angular acceleration.

By placing the electric motor as well as the sensor arrangement and the controller in the swivel caster, it can operate autonomously when used in a mobile wheeled device, i.e. independently from circuitry arranged on the mobile wheeled device itself, and since the angular acceleration, which can be easily measured in the swivel caster, is proportional to the linear acceleration of the mobile wheeled device in which it is used, it is also, for a given weight of the mobile wheeled device, proportional to the force acting from the outside on the mobile wheeled device, e.g. from a person pushing or pulling the mobile wheeled device. Further, the assisting torque delivered to the mobile wheeled device by the electric motor in the swivel caster is proportional to the drive current provided to the electric motor. Thus, although a mobile wheeled device is driven by an autonomous swivel caster, it is driven with an assisting torque in direct dependence of the force exerted on the mobile wheeled device by a person pushing or pulling it, thus reflecting the intention of that person.

The swivel caster may comprise a slip ring configured to establish an electrical connection to a mobile wheeled device.

In an embodiment, the controller is configured to control the drive current provided to the electric motor by increasing the drive current to the electric motor when the measured angular acceleration exceeds a positive threshold, decreasing the drive current to the electric motor when the measured angular acceleration is below a negative threshold, and maintaining the drive current to the electric motor unchanged when the measured angular acceleration is between said negative threshold and said positive threshold. In this way, a very steady control of the motor is achieved, in which an irregular walking pattern of the person pushing or pulling a mobile wheeled device in which the swivel caster is used does not affect the control.

In an embodiment, the swivel caster comprises a rotational or directional lock, which in a locked position is configured to prevent rotation of the swivel caster, and wherein the controller is configured to drive the electric motor only when the rotational lock is in its locked position. In this way, it is ensured that current is provided to the motor only when the swivel caster is locked in an appropriate position, e.g. a position where the wheel is aligned with a longitudinal axis of a mobile wheeled device in which the swivel caster is used.

In an embodiment, the swivel caster comprises a brake, which in a braked position is configured to prevent the wheel from turning or rolling, and wherein the controller is configured to drive the electric motor only when the brake is not in its braked position. In this way, it is ensured that current is provided to the motor only when the wheel is free to turn around.

The sensor arrangement may further be configured to measure an angular speed of the wheel, and the controller is further configured to drive the electric motor in dependence of the measured speed. As an example, the measured speed can be used for detecting the movement direction of a mobile wheeled device in which the swivel caster is used. Thus, a positive speed can indicate that the swivel caster is moved in a forward direction, while a negative speed correspondingly can indicate that the swivel caster is moved in a backward direction.

In an embodiment, the swivel caster further comprises a tilt detector arranged to determine a component of the gravitational acceleration in a driving direction of the wheel, and the controller is further configured to drive the electric motor of the driven wheel in dependence of said determined component of the gravitational acceleration. In this way, it is achieved that the swivel caster automatically can compensate for the additional force needed to a mobile wheeled device in which the swivel caster is used when it is moved on an uphill slope and for the reduced force needed when it is moved on a downhill slope.

In this case, the controller may be configured to determine a tilt compensation current in dependence of said determined component of the gravitational acceleration and to drive the electric motor of the wheel with the drive current determined in dependence of the measured angular acceleration in combination with the tilt compensation current.

In one embodiment, the tilt detector comprises a 3-dimensional DC response accelerometer arranged to measure gravitational acceleration in relation to a plane perpendicular to the longitudinal axis of the shaft for connecting the swivel caster to a mobile wheeled device. Alternatively, the tilt detector may comprise an angle measuring device arranged to determine an angle between a plane perpendicular to the longitudinal axis of the shaft for connecting the swivel caster to a mobile wheeled device and a horizontal plane, and the controller may further be configured to determine said component of the gravitational acceleration from said determined angle.

The invention also relates to a mobile wheeled device comprising at least one swivel caster as described above.

### Brief Description of the Drawings

Embodiments of the invention will now be described more fully below with reference to the drawings, in which
Figure 1 shows a hospital bed as an example of a mobile device, in which a swivel caster according to the invention can be used,
Figure 2 shows an example of a swivel caster with a driven wheel for use in the hospital bed of Figure 1,
Figure 3 shows a cross section of a top part of a swivel caster with a slip ring,
Figure 4 shows a schematic structure of a wheel with an electric motor incorporated into the wheel hub of the swivel caster of Figure 2,
Figure 5 shows a rotary encoder with an optical sensor and an optical pattern arranged on a circular shaped ring element,
Figure 6 shows an example of a control system for the electric motor of Figure 4,
Figure 7 shows an example of a control strategy for controlling the drive current to the motor of Figure 4 in dependence of measured angular acceleration,
Figure 8 shows the control system of Figure 6 with some added functions,
Figure 9 shows the control system of Figure 8 with a tilt detector included,
Figure 10 illustrates the measurement of the gravitational acceleration in a bed placed on a horizontal surface, and
Figure 11 illustrates the measurement of the gravitational acceleration in a bed placed on a sloped surface.

### Detailed Description

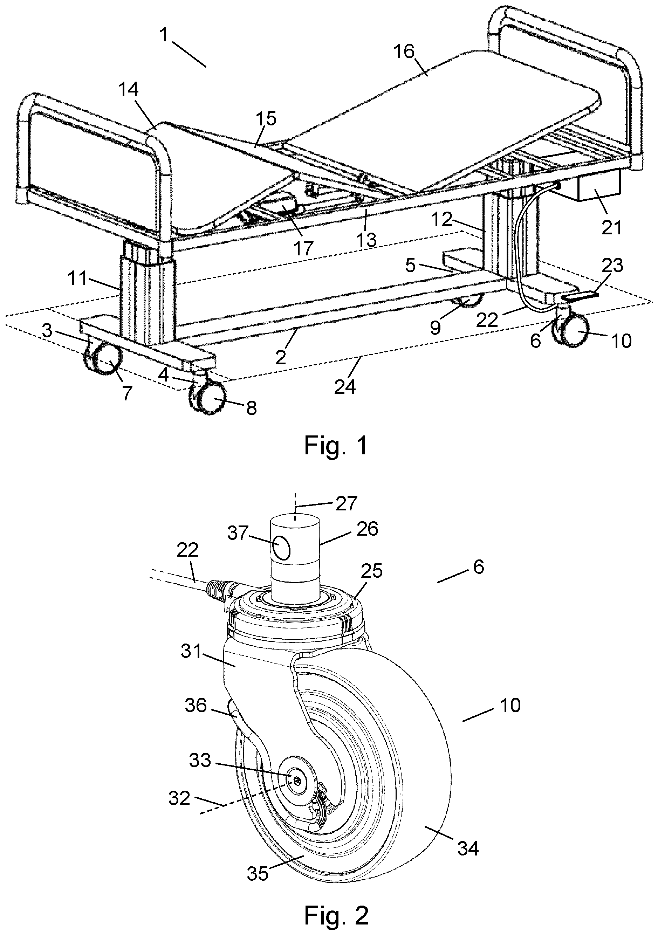

As an example of a mobile wheeled device, in which the invention can be used, Figure 1 shows a hospital bed 1. It is noted that the invention can just as well be used in other types of mobile wheeled devices, such as shopping carts, roller tables, trolleys, transport containers or waste containers.

The hospital bed 1 has a base 2 defining a substantially rectangular shape, and in each corner of the base 2, a swivel caster is arranged, i.e. three swivel casters 3, 4 and 5 with undriven wheels 7, 8, and 9 and one swivel caster 6 with a driven wheel 10. The driven wheel 10 is used to assist propulsion of the hospital bed 1, thus making it easier for a person to push or pull the bed.

It is noted that the substantially rectangular shape defined by the base 2 does not need to be exactly rectangular. Thus, it can be slightly trapezium shaped if e.g. two front wheels are arranged with a shorter distance between them than the two rear wheels. Further, it is noted that although the base 2 defines the substantially rectangular shape by the four corners, in which the swivel casters are arranged, the base itself may have other forms.

It is also noted that although the embodiment described here and shown in Figure 1 is equipped with four swivel casters, i.e. three swivel casters with undriven wheels and one with a driven wheel, some or all of the wheels may in other embodiments be arranged as fixed wheels. Further, more than one of the wheels may be a driven wheel.

Two lifting columns 11 and 12 arranged on the base 2 carry a bed frame 13, which can be lowered or raised by means of the lifting columns 11 and 12. On the bed frame 13, a number of bed sections 14, 15 and 16 may be tilted by means of one or more linear actuators 17. Also a power supply 21 is arranged on the bed frame 13 for supplying power to e.g. the lifting columns 11 and 12 and the one or more linear actuators 17. The power supply 21 can be a supply connected to a mains supply, a supply incorporating a battery, or a combination thereof.

Also the swivel caster 6 with the driven wheel 10 is connected to the power supply 21 with a cable 22, so that an electric motor (which will be described in the following) driving the wheel 10 can be supplied with power. As an alternative to supplying the electric motor in the wheel 10 with power from the power supply 21 via the cable 22, a rechargeable or replaceable battery may be arranged in the swivel caster 6.

A handle or foot pedal 23 is arranged on the base 2 close to the swivel caster 6 with the driven wheel 10 (as shown here) or at the swivel caster 6 itself. In one position of this handle, e.g. when pushed upwards, the caster can be locked in a given position (i.e. prevented from swivelling), and in another position of the handle, e.g. when pushed downwards, the wheel 10 can be braked or locked (i.e. prevented from turning around in the caster 6). Alternatively, separate handles/foot pedals may be used for these functions.

Further, the four corners of the rectangular shaped base 2 define a plane 24 arranged to be parallel to a surface on which the hospital bed 1 is placed. Thus, when the hospital bed 1 is placed on a horizontal surface, the plane 24 is also a horizontal plane.

Figure 2 shows the swivel caster 6 with the driven wheel 10 in further detail. The swivel caster 6 has a top part 25, which is fixed relatively to the base 2 by means of a mounting stem or mounting shaft 26 having a center axis 27 and being arranged to be received in a fitting aperture in the base 2 so that the center axis 27 is perpendicular to the plane 24.

The driven wheel 10 is mounted to a fork 31, which is connected to the fixed top part 25 through a (not shown) swivel joint allowing the fork 31, and thus the wheel 10, to rotate freely 360 degrees about the center axis 27 of the mounting shaft 26. Around a center axis 32 of the wheel 10, a wheel hub 33 is arranged. It is noted that there is a certain amount of offset distance between the center axis 27 of the mounting shaft 26 and the center axis 32 of the wheel 10, which allows the swivel caster 6 to follow the movement direction of the hospital bed. Figure 2 also shows that the wheel 10 has a tread 34 and a wheel cap 35 behind which the electric motor driving the wheel is arranged.

As mentioned above, the swivel caster 6 is supplied with power through the cable 22, which is connected to the top part 25. In the top part 25, a slip ring arrangement, which will be described below, ensures that the power can be delivered to the swivelling part of the caster 6, i.e. the electric motor driving the wheel and other circuitry, through a cable 36 attached to the fork 31.

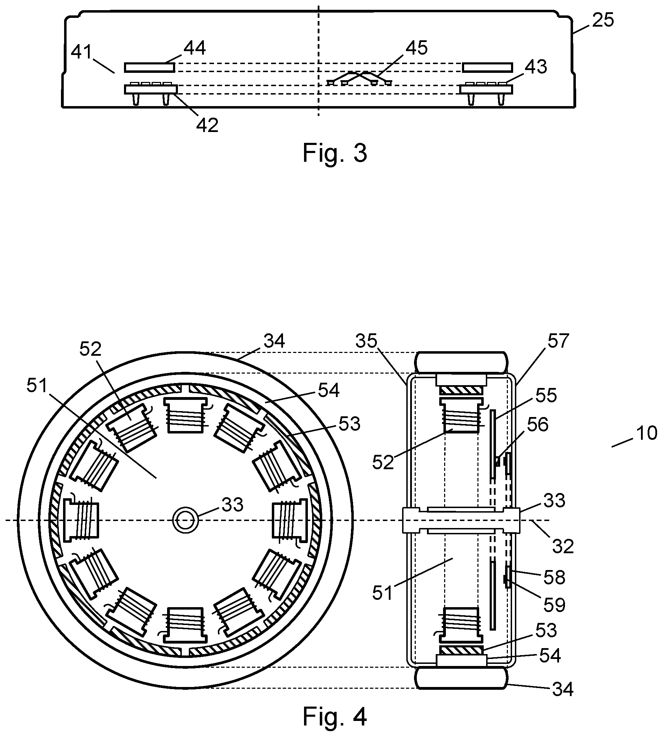

Figure 3 shows a cross section of the top part 25 illustrating an embodiment of a slip ring 41 comprising two ring shaped printed circuit boards. A lower printed circuit board 42 is attached to the swivelling part of the caster 6, i.e. the fork 31, and is provided with a number of circular circuit traces 43. An upper printed circuit board 44 is attached to the fixed top part 25 and is provided with a number of sliding contacts 45 arranged to be in contact with the circuit traces 43 on the lower printed circuit board 42. Although not shown, the sliding contacts 45 are connected to the cable 22, while the circuit traces 43 are connected to the cable 36. Alternatively, the circuit traces can be arranged on the upper printed circuit board 44 and the sliding contacts on the lower printed circuit board 42, or other contact types can be used.

As shown in Figure 2, a hole 37 is arranged in the mounting shaft 26. This hole 37 can receive a shaft of the foot pedal 23, and through well-known and not shown mechanisms in the swivel caster 6, the caster can be locked in a given position (i.e. prevented from swivelling), and the wheel 10 can be braked or locked (i.e. prevented from turning around in the caster 6).

Figure 4 illustrates a schematic structure of an example of the wheel 10 with an electric motor 51 incorporated into the wheel hub 33. The electric motor 51 shown in Figure 4 is a brushless DC motor of the so-called outrunner or external-rotor configuration, where electromagnets 52, each one having a stator winding or stator coil wound on a core, form the center (core) of the motor, while permanent magnets 53 are arranged within an overhanging rotor or ring part 54 that surrounds the core. The tread 34 of the wheel 10 is arranged at the outer side of the ring part 54. It is noted that the number of electromagnets 52 and permanent magnets 53 shown in Figure 4 is just an example. Several other combinations are possible.

An electronic control circuit 61, which will be described in detail below, continually switches the currents in the motor phases to the stator windings to keep the motor turning, based on e.g. signals from Hall Effect sensors that provide information about the rotor's orientation and position relative to the stator coils. This ensures the correct commutation of the brushless DC motor 51. Together with other electronic components, this control circuit can be arranged at a printed circuit board 55 that is fixed to the stator part of the motor and thus also incorporated into the wheel hub 33.

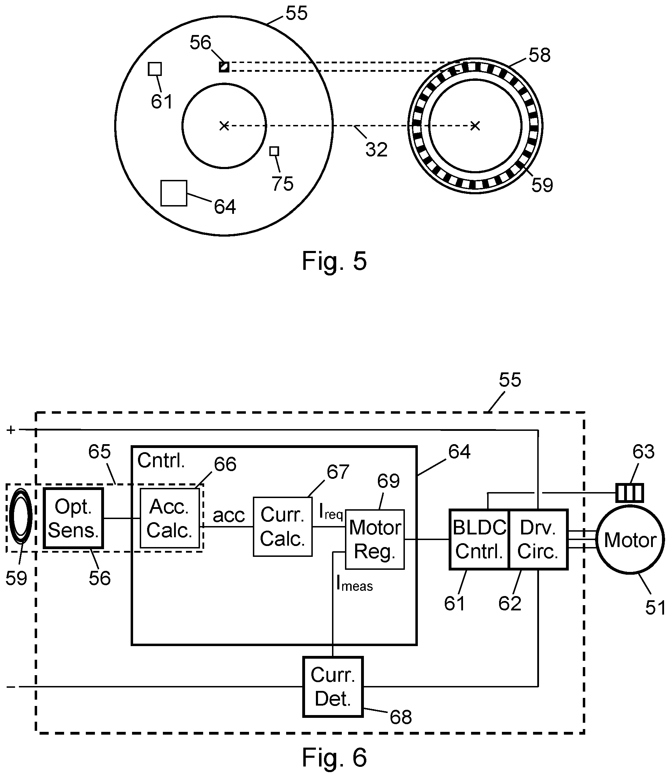

To ensure that the motor 51, and thus the wheel 10, can be driven in dependence of a force acting from the outside on the hospital bed 1, a rotary encoder is arranged in the wheel 10. The rotary encoder comprises an optical sensor 56 arranged on the printed circuit board 55 and an optical pattern 59 arranged on a circular shaped ring element 58 attached to a wheel cap 57, which is similar to the wheel cap 35 on the other side of the wheel 10. This is illustrated in Figure 5. Thus, the optical sensor 56 is fixed to the stator part of the motor, while the optical pattern 59 rotates with the rotor part of the motor, thus allowing the sensor 56 to detect the position of the wheel by means of the optical pattern 59 passing by during the rotation of the wheel 10.

Figure 6 illustrates an example of a control system for the brushless DC motor 51 of the wheel 10. In this example, the basic control of the motor 51, i.e. the synchronization of the currents in the stator windings to the actual positions of the rotor magnets, is performed by a BLDC controller 61 and a driver circuit 62 based on signals from Hall Effect sensors 63 that provide information about the positions of the rotor magnets relative to the stator coils. This type of control is well-known and will not be described in further detail here. The BLDC controller 61 and the driver circuit 62 are placed on the printed circuit board 55, as also indicated on Figure 5.

It is noted that since the optical sensor 56 detects the position of the wheel, and thus also the position of the rotor magnets 53 relative to the stator coils 52, signals from this sensor can also be used by the BLDC controller 61 to synchronize the currents in the stator windings to the actual positions of the rotor magnets when the motor is running. However, this sensor only provides relative position information for the magnets, and therefore signals from the Hall Effect sensors 63 are still needed during start-up of the motor, and it may also be expedient to synchronize with the Hall elements occasionally when the motor is running.

According to the invention, the assisting propulsion provided to the hospital bed by the wheel 10 is provided by controlling a drive current provided to the electric motor 51 in dependence of a measured angular acceleration of the wheel 10. Thus, Figure 6 also shows that a main controller 64 configured to control the drive current to the electric motor 51 in dependence of a measured angular acceleration of the wheel 10 can be arranged on the printed circuit board 55. A possible arrangement of the main controller 64 on the printed circuit board 55 is illustrated in Figure 5. It is noted that in some embodiments, the functions of the BLDC controller 61 may be integrated into the main controller 64.

The angular acceleration is continuously determined by a sensor arrangement 65 comprising the rotary encoder, i.e. the optical pattern 59 and the optical sensor 56, and an acceleration calculating unit 66. In this embodiment, the acceleration calculating unit 66 is an integrated part of the main controller 64, but the calculation of the acceleration could just as well be performed in a separate circuit.

When the optical pattern 59 rotates with the wheel 10, the optical sensor 56 generates a series of pulses, each pulse indicating a position of the wheel. Based on these pulses, the acceleration calculating unit 66 can continuously determine the present angular speed as well as the present angular acceleration of the wheel. The speed can be determined e.g. by counting the number of pulses in a predetermined time window, measuring the time between two consecutive pulses, or by means of other well-known algorithms for this purpose. Since the acceleration is defined as the change in the measured speed, the acceleration can then be determined from the speed. Alternatively, several well-known algorithms exist for determining the angular acceleration directly from the pulses from the optical sensor 56. An example of such an algorithm is the use of a correlation matrix or correlation tables.

Since the angular acceleration of the wheel 10 is proportional to the linear acceleration of the hospital bed, it is also, for a given weight of the bed, proportional to the force acting from the outside on the bed, e.g. from a person pushing or pulling it. Thus, at any time, the angular acceleration measured locally in the wheel is a signal that directly indicates a force acting from the outside on the hospital bed, and thus also the intention of the person pushing or pulling the bed.

As mentioned above, the assisting propulsion provided by the driven wheel 10 to the hospital bed 1 is controlled by controlling the drive current provided to the electric motor 51 in dependence of the measured angular acceleration of the wheel. Controlling the drive current is advantageous because the assisting torque delivered to the hospital bed 1 by the electric motor 51 in the driven wheel is proportional to the drive current provided to the electric motor. Thus, although the hospital bed 1 is driven by an autonomous wheel, it is driven with an assisting torque in direct dependence of the force exerted on the bed by a person pushing or pulling it, thus reflecting the intention of that person.

Based on the measured angular acceleration, a current calculating unit 67 can continuously determine an assist current Iₐₛₛ according to a desired control strategy as described in the following. The assist current Iₐₛₛ can then be used as a requested current I_{raq} for driving the electric motor 51. One control strategy is to simply let the assist current Iₐₛₛ be directly proportional to the measured angular acceleration of the wheel. This gives a quick and direct control of the motor, but the control may also tend to be a bit "nervous" because it tries to follow the irregular walking pattern of the person pushing or pulling the bed.

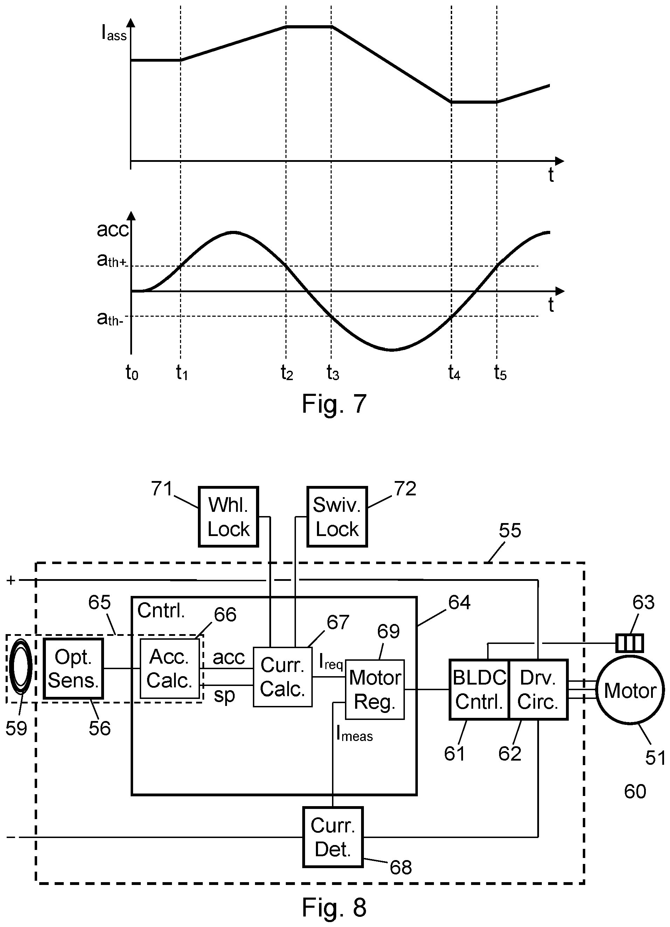

Another control strategy that overcomes this drawback is illustrated in Figure 7. This strategy uses two thresholds, i.e. a positive threshold aₜₕ₊ and a negative threshold aₜₕ₋, for the measured angular acceleration of the wheel. For small values of the measured angular acceleration, i.e. between aₜₕ₋and aₜₕ₊, the assist current Iₐₛₛ is maintained unchanged, as it is shown in Figure 7 between t₀ and t₁, between t₂ and ts, and between t₄ and t₅. However, when the measured angular acceleration exceeds the positive threshold aₜₕ₊, e.g. as illustrated between t₁ and t₂ in Figure 7, the assist current Iₐₛₛ is increased linearly, e.g. with a rate of 5 mA/ 10 ms, independently of how much the acceleration exceeds the threshold aₜₕ₊. Similarly, when the measured angular acceleration falls below the negative threshold aₜₕ₋, e.g. as illustrated between t₃ and t₄ in Figure 7, the assist current Iₐₛₛ is decreased linearly, e.g. with a rate of - 10 mA/ 10 ms, independently of how much the acceleration falls below the threshold atn-. In this way, a very steady control of the motor is achieved, in which an irregular walking pattern of the person pushing or pulling the bed does not affect the control.

The control strategy may also include a braking function. If the user, i.e. the person pushing or pulling the bed, initiates a big deacceleration, the assist current Iₐₛₛ will rapidly be reduced, and ultimately a braking force will be provided. Thus, as an example, if the measured angular acceleration falls below a (negative) braking threshold, which is considerably lower than the negative threshold aₜₕ₋ mentioned above, the assist current Iₐₛₛ will first be reduced with a relatively low value, e.g. with a rate of -10 mA/ 10 ms as above, and the reduction may then be doubled e.g. every 100 ms until a maximum reduction is reached. If the assist current Iₐₛₛ during this process falls below zero, it means that a braking force will be provided.

Since the BLDC controller 61, and thus the motor 51, is controlled by a voltage instead of a current, a feedback loop for the drive current is arranged. A current detector 68 measures the actual current Iₘₑₐₛ drawn by the motor, and in the motor regulator 69 the actual current Iₘₑₐₛ is compared to the determined requested current I_{req}, and the output voltage to the BLDC controller 61 is continuously adjusted so that the actual current Iₘₑₐₛ keeps following the requested current I_{req}.

Although the current calculating unit 67, as mentioned above, determines the assist current Iₐₛₛ based on the measured angular acceleration, other signals may also influence the determined requested current I_{req}. Thus, as also mentioned above in relation to Figures 1 and 2, the caster 6 can be locked in a given position (i.e. prevented from swivelling), and the wheel 10 can be braked or locked (i.e. prevented from turning around in the caster 6). These locking mechanisms may include detectors that indicate their locking status. Thus, Figure 8 shows a wheel lock detector 71 that provides a signal to the current calculating unit 67 indicating whether or not the wheel 10 is locked. The current calculating unit 67 can then be configured to provide an output signal I_{req} only when the wheel is unlocked. Similarly, Figure 8 shows a swivel lock detector 72 that provides a signal to the current calculating unit 67 indicating whether or not the swivel caster 6 is locked. The current calculating unit 67 can then be configured to provide an output signal I_{req} only when the swivel caster is locked in an appropriate position, e.g. a position where the wheel 10 is aligned with a longitudinal axis of the hospital bed 1. It is noted that the wheel 10 can be aligned with the longitudinal axis of the hospital bed 1 in two opposite directions, and therefore, the swivel lock detector 72 can also be configured to provide a signal to the current calculating unit 67 indicating the direction in which the swivel caster 6 is locked.

As mentioned, the acceleration calculating unit 66 can determine the present angular acceleration as well as the present angular speed of the wheel 10 based on the pulses received from the optical sensor 56. Thus, as shown in Figure 8, the signal indicating the angular speed of the wheel 10 may also be provided to the current calculating unit 67. Here, it can e.g. be used for detecting the movement direction of the hospital bed 1. Thus, a positive speed can indicate that the swivel caster 6 is moved in a forward direction, while a negative speed correspondingly can indicate that the swivel caster 6 is moved in a backward direction. The measured speed may also influence the way in which the assist current Iₐₛₛ is determined in dependence on the measured angular acceleration. As an example, the rate with which the assist current Iₐₛₛ as illustrated in Figure 7 is increased linearly when the measured angular acceleration exceeds the positive threshold aₜₕ₊ can depend on the measured speed, e.g. a higher rate may be used for low speeds.

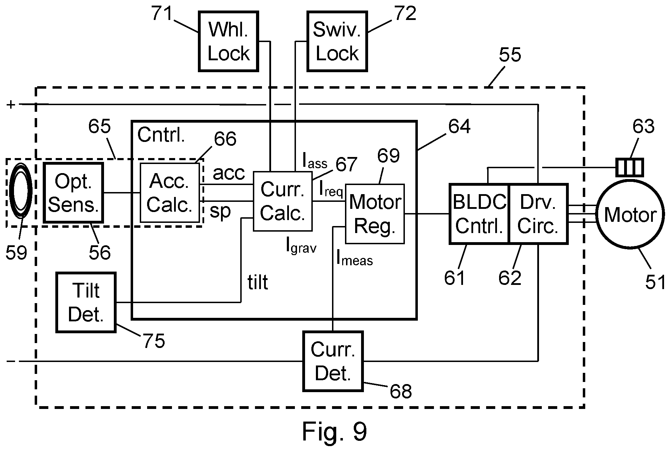

A hospital bed is not always placed or moved at a perfectly horizontal surface. Instead, it sometimes must be moved up or down a slope, which may affect the movement of the bed. In order to take this into account, the swivel caster 6 may also include a tilt detector 75, which as shown in Figure 9 and illustrated in Figure 5 can be arranged on the printed circuit board 55. In one embodiment, the tilt detector 75 comprises a 3-dimensional accelerometer arranged to measure gravitational acceleration in relation to the plane 24 defined by the corners of the rectangular base 2. The accelerometer is a DC response accelerometer, which can be used to measure static acceleration, such as gravity.

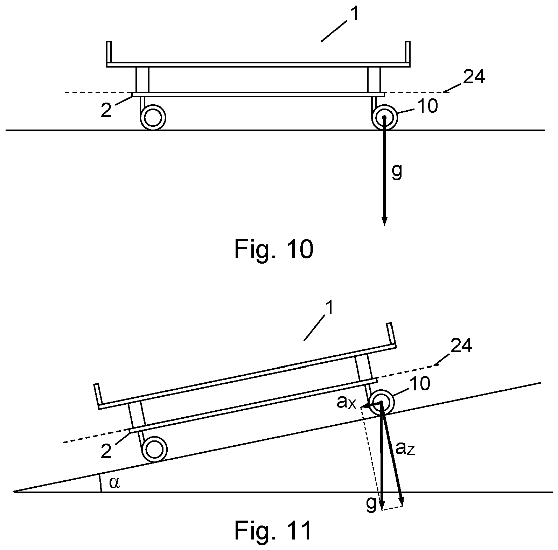

Figure 10 shows the bed 1 when placed on a horizontal surface. Thus, also the plane 24 is a horizontal plane. The tilt detector 75 is configured to measure gravitational acceleration along three orthogonal axes, i.e. an X-axis, a Y-axis, and a Z-axis. The X- and Y-axes are in a plane parallel to the plane 24, i.e. in Figure 10 in a horizontal plane, with the X-axis in a longitudinal direction of the hospital bed 1, while the Z-axis is perpendicular to the plane 24. Thus, in Figure 10, where the bed is placed at or moving at a horizontal surface, the tilt detector 75 will measure no gravitational acceleration along the X-axis or the Y-axis, whereas an acceleration g, i.e. the gravitational acceleration, will be measured along the Z-axis. Since there is measured no gravitational acceleration in the longitudinal direction of the hospital bed 1, i.e. along the X-axis, the movement of the bed is not affected, and the assist current Iₐₛₛ determined in the current calculating unit 67 as above based on the measured angular acceleration is used as the determined requested current I_{raq}.

In Figure 11, the bed 1 is shown when placed on a slope with an angle α in relation to a horizontal surface. Thus, the angle α also defines the angle between the plane 24 and a horizontal plane. In the tilt detector 75, the gravitational acceleration will now be measured as a longitudinal acceleration component ax along the X-axis and a perpendicular acceleration component az along the Z-axis. The size of the longitudinal component ax of the gravitational acceleration is equal to ax = g tan(α), and due to its longitudinal direction, it affects the hospital bed with a force in the same or the opposite direction as the force acting from the outside on the bed, e.g. from a person pushing or pulling it. Thus, if the bed is pushed uphill, additional force is needed due to the longitudinal component of the gravitational acceleration, and correspondingly less force is needed when bed is pushed downhill.

To compensate for this effect, the current calculating unit 67 is configured to determine a gravity compensation current I_{grav}, which is proportional to the longitudinal acceleration component ax measured by the tilt detector 75. It is noted that the gravity compensation current I_{grav} will have a positive value when the bed is pushed uphill, i.e. when the direction of the longitudinal acceleration component ax is opposite the direction of the force pushing the bed. Correspondingly, the value will have a negative value when the longitudinal acceleration component ax and the force pushing the bed have the same direction, i.e. the bed is pushed downhill. In the current calculating unit 67, the gravity compensation current I_{grav} is then added to the assist current Iₐₛₛ determined as above based on the measured angular acceleration and used as the determined requested current I_{req}. Thus, I_{req} = Iₐₛₛ + I_{grav}. In this way, it is achieved that the driven wheel 10 automatically can compensate for the additional force needed to the bed when it is moved on an uphill slope and for the reduced force needed when it is moved on a downhill slope.

Further, in some situations, this solution may prevent the hospital bed 1 from starting to roll by itself, if it has been left unbraked on a slope, because in this situation the angular acceleration measured by the sensor arrangement 65 is alone caused by the longitudinal acceleration component ax, and thus with a suitable choice of coefficients, Iₐₛₛ and I_{grav} can counterbalance each other.

In the embodiment described above, the tilt detector 75 uses a 3-dimensional accelerometer configured to measure gravitational acceleration along three orthogonal axes, i.e. an X-axis, a Y-axis, and a Z-axis, thereby determining a longitudinal acceleration component ax along the X-axis, which due to its longitudinal direction is used for determining a gravity compensation current I_{grav}. Alternatively, different types of tilt detectors may be used. As an example, an angle measuring device or inclinometer can be used to measure the angle α, and the longitudinal acceleration component ax can then be determined as ax = g tan(α).

Although various embodiments of the present invention have been described and shown, the invention is not restricted thereto, but may also be embodied in other ways within the scope of the subject-matter defined in the following claims.

## Claims

1. A swivel caster (6) comprising:
• a wheel (10),
• an electric motor (51) incorporated into a wheel hub (33) for driving the wheel (10), and
• a shaft (26) for connecting the swivel caster (6) to a mobile wheeled device and allowing the swivel caster (6) to rotate around a longitudinal axis (27) of the shaft (26),
**characterized in that** the swivel caster (6) further comprises:
• a sensor arrangement (65) comprising a rotary encoder arranged in said wheel hub (33) and configured to measure an angular acceleration of the wheel (10), and
• a controller (64) configured to control a drive current provided to the electric motor (51) in dependence of the measured angular acceleration.

2. A swivel caster according to claim 1, **characterized in that** the swivel caster (6) comprises a slip ring (41) configured to establish an electrical connection to a mobile wheeled device.

3. A swivel caster according to claim 1 or 2, **characterized in that** the controller (64) is configured to control the drive current provided to the electric motor (51) by
• increasing the drive current to the electric motor (51) when the measured angular acceleration exceeds a positive threshold (aₜₕ₊),
• decreasing the drive current to the electric motor (51) when the measured angular acceleration is below a negative threshold (aₜₕ₋), and
• maintaining the drive current to the electric motor (51) unchanged when the measured angular acceleration is between said negative threshold (aₜₕ₋) and said positive threshold (aₜₕ₊).

4. A swivel caster according to any one of claims 1 to 3, **characterized in that** the swivel caster (6) comprises a rotational lock, which in a locked position is configured to prevent rotation of the swivel caster (6), and wherein the controller (64) is configured to drive the electric motor (51) only when the rotational lock is in its locked position.

5. A swivel caster according to any one of claims 1 to 4, **characterized in that** the swivel caster (6) comprises a brake, which in a braked position is configured to prevent the wheel (10) from turning, and wherein the controller (64) is configured to drive the electric motor (51) only when the brake is not in its braked position.

6. A swivel caster according to any one of claims 1 to 5, **characterized in that** the sensor arrangement (65) is further configured to measure an angular speed of the wheel (10), and the controller (64) is further configured to drive the electric motor (51) in dependence of the measured angular speed.

7. A swivel caster according to any one of claims 1 to 6, **characterized in that**
• the swivel caster (6) further comprises a tilt detector (75) arranged to determine a component (ax) of the gravitational acceleration in a driving direction of the wheel (10), and
• the controller (64) is further configured to drive the electric motor (51) of the driven wheel (10) in dependence of said determined component (ax) of the gravitational acceleration.

8. A swivel caster according to claim 7, **characterized in that** the controller (64) is configured to determine a tilt compensation current (I_{grav}) in dependence of said determined component (ax) of the gravitational acceleration and to drive the electric motor (51) of the wheel (10) with the drive current (Iₐₛₛ) determined in dependence of the measured angular acceleration in combination with the tilt compensation current (I_{grav}).

9. A swivel caster according to claim 7 or 8, **characterized in that** the tilt detector (75) comprises a 3-dimensional DC response accelerometer arranged to measure gravitational acceleration in relation to a plane perpendicular to the longitudinal axis (27) of the shaft (26) for connecting the swivel caster (6) to a mobile wheeled device.

10. A swivel caster according to claim 7 or 8, **characterized in that** the tilt detector (75) comprises an angle measuring device arranged to determine an angle (α) between a plane perpendicular to the longitudinal axis (27) of the shaft (26) for connecting the swivel caster (6) to a mobile wheeled device and a horizontal plane, and the controller (64) is further configured to determine said component (ax) of the gravitational acceleration from said determined angle (α).

11. A mobile wheeled device comprising at least one swivel caster according to any one of claims 1 to 10.
